# EUROPEAN PATENT APPLICATION

(11) **EP 2 027 905 A2**
(43) Date of publication of application: **25.02.2009**
(21) Application number: 08013212.9
(22) Date of filing: 22.07.2008
(51) Int. Cl.: B01D 29/11

(54) **Self-cleaning system for filter**

(30) Priority: 23.08.2007 US 843710
(71) Applicant: Odis Irrigation Equipment Limited, Petach Tikva 49130 (IL)
(72) Inventor: Gil, Shmuel, Kfar Saba 44534 (IL)
(74) Representative: Grünecker, Kinkeldey, Stockmair & Schwanhäusser Anwaltssozietät

(57) **Abstract**

A self-cleaning system for use with a filter having a fluid inlet station, including (a) a manifold mountable at least for reciprocation along an axis with respect to said filter and comprising at least one suction opening adapted to be in proximity to said station and connectable to a suitable suction source for enabling foreign material to be removed from said filter when said system is installed and in operation with respect to said filter; (b) fluid powered motive means for propelling said manifold along said axis; and (c) a reciprocating mechanism for alternately changing the direction of motion of said manifold along said axis.

## Description

### FIELD OF THE INVENTION

This invention relates to continuous flow filter devices, specially such devices that incorporate automatic self-cleaning systems. The invention is particularly concerned with filter self-cleaning systems that are powered by a fluid, and more particularly by the operating fluid that is being filtered.

### BACKGROUND OF THE INVENTION

Filtering systems are widely used for removing particles from liquids. Some such system have a pre-filtering unit equipped with a coarse filter for removing rough particles from the liquid, and a fine filtering unit with a multi-layer sintered filtering element for removing particles, which according to the specific filtering application, may be of a size ranging between 2 and 500 microns, for example.

A problem encountered with such systems is the accumulation of particles and sediments on the filtering element during filtration, which block the filtering apertures or pores of the element. While in some cases, the filtering efficiency is initially increased, such sedimentation leads to a lowering of the flow throughput of the system, and, if untreated, to a full blockage thereof. Such filtration systems thus need to be serviced from time to time, in order to clean or replace the at least partially blocked filter element. In some systems, this would require temporary system shutdown, to enable this work to be carried out.

Self-cleaning filter systems have been developed to enable the filter element to be cleaned in situ without the need for dismantling the system, which is otherwise required for accessing the filter element. In US 6,267,879, an improved continuous filtering apparatus is disclosed, having a preliminary filtering chamber having a liquid inlet and a coarse filtering screen, and a final filtering chamber having a cylindrical multi-layer sintered filtering element in liquid communication with the preliminary filtering chamber across the coarse filtering screen. A filtered liquid chamber is in liquid communication with the final filtering chamber across the sintered filtering element, and has a liquid outlet. An electromechanical cleaning system is provided, adapted to remove sediments from the sintered filtering element, and controlling means enable activation of the cleaning system during the filtration process, for limited periods or continuously, according to the operational mode. The self-cleaning system is based on a back and forth helical motion of a dirt collector having dirt suction members equipped with spraying nozzles. The spraying nozzles use the filtered liquid after being pressurized by a booster pump for vibrating and rinsing the sediments accumulated on the sintered filtering element. The pressure-difference between the liquid within the apparatus and the atmosphere outside of the apparatus is utilized to provide a suction force for the operation of the dirt suction members. The electrical motor is geared to the collector unit through a worm gear for obtaining the helical movement of the collector.

In US 5,228,993, a filter system uses a self-cleaning system comprising a plurality of nozzles that direct a plurality of nozzles sprays onto the clogged filter discs, following a helical path. Both linear and rotational motion to the nozzles may be provided by a single apparatus, which may be powered by hand or by an electric motor, or by separate independent apparatus, such as for example a hand operated or fluid operated piston for the linear motion, and a water powered rotating nozzle for the rotation.

Of general background interest, in US 4,157,251, a spraying system attached to a reciprocating traveler is used for cleaning banks of filters.

### SUMMARY OF THE INVENTION

The present invention relates to, but is limited to, filtration of liquids, irrigation water, recycling of sewage and industrial waste water, recycling of cooling towers water, filtration and purification of drinking water etc.

The present invention provides a high efficiency continuous liquid filtering apparatus having self-cleaning mechanism allowing the continuous filtering operation, i.e. without interrupting the supply of filtered liquid.

In the context of the present invention the term "multi-layer sintered filtering element" relates to any type of metallic body constructed from a plurality of metal screens of different densities or patterns, or of a plurality of metal wires, sintered together for being one integral metallic body useful for the filtration of particles from a substance flowing across its multi layers.

The term "foreign material" refers to any material that is filtered out by the filter and which it is desired to remove therefrom by the self-cleaning action according to the invention.

The present invention relates to a self-cleaning system for use with a filter having a fluid inlet station, comprising:-
a manifold mountable at least for reciprocation along an axis with respect to said filter and comprising at least one suction opening adapted to be in proximity to said station and connectable to a suitable suction source for enabling foreign material to be removed from said filter when said system is installed and in operation with respect to said filter;
fluid powered motive means for propelling said manifold along said axis;
a reciprocating mechanism for alternately changing the direction of motion of said manifold along said axis.

In particular embodiments, the manifold is also adapted for rotation about said axis, and said motive means comprises a rotational motor coupled to said reciprocating mechanism such as to provide a helical motion to said at least one suction opening. The rotational motor comprises at least one arm radiating from said manifold and having a nozzle outlet in communication with said at least one suction opening, said nozzle outlet being tangentially disposed with a direction of rotation of said motor. The rotational motor is coupled to said reciprocating mechanism to provide an endless helical motion to said at least one suction opening. The system may comprise a sliding bearing arrangement for mounting the system with respect to a housing comprising a said filter.

In one embodiment, the rotational motor and said reciprocating mechanism comprise a follower coupled to a cylindrical cam arrangement, and wherein said cam comprises an endless track adapted for enabling the follower to reciprocate along said axis in response to a relative rotation between said cam and said follower about said axis. The endless track typically comprises twin parallel helical tracks wound in opposite directions one with respect to another, and joined together at longitudinal ends via corner portions. The cylindrical cam may be fixedly mountable to a housing comprising said filter and said follower is mounted to said manifold for rotation therewith, when the system is installed with respect to said filter. Alternatively, the follower is fixedly mountable to a housing comprising said filter and said cylindrical cam is mounted to said manifold for rotation therewith, when the system is installed with respect to said filter.

In another embodiment, the rotational motor and said reciprocating mechanism comprise a follower coupled to an end cam arrangement, and wherein said end cam comprises an endless track adapted for enabling the follower to reciprocate along said axis in response to a relative rotation between said cam and said follower about said axis. The endless track typically comprises an endless undulating contour comprising a plurality of peaks smoothly joined with a number of intercalated troughs, arranged in an annular manner. The peaks and troughs may merge into one another in a substantially sinusoidal manner in a circumferential direction. The follower may be mounted to a gear arrangement coupled to said rotational motor. The gear arrangement typically comprises a planetary gear arrangement, wherein said rotational motor is mounted for rotation with a sun gear and said follower is mounted for rotation with an orbital gear of said planetary gear arrangement. The end cam may be fixedly mountable to a housing comprising said filter and said follower is mounted to said manifold for rotation therewith, when the system is installed with respect to said filter. Alternatively, the follower is fixedly mountable to a housing comprising said filter and said end cam is mounted to said manifold for rotation therewith, when the system is installed with respect to said filter.

In another embodiment, the rotational motor and said reciprocating mechanism comprise a shuttle arrangement mounted on an axial rail support for axial translation with respect thereto, said rail being fixedly mountable to a housing comprising said filter when the system is installed with respect to said filter, said shuttle being coupled to said rotational motor such that a rotation of said motor about said axis provides a translation of said shuttle along said rail.
The shuttle may comprise:
a frame axially displaceable with respect to said rail and comprising a pivoting plate having two end pivot positions, said plate comprising a first gear means mounted for rotation at the pivot thereof and coupled to said rotational motor, said pivoting plate further comprising second and third gear means in mesh engagement with the other, wherein said second gear means is in mesh engagement with said first gear means via a fourth gear means carried on said pivoting plate;
first moving means coupled to a fifth gear means and second moving means coupled to a sixth gear means, each one of said second and third gear means being in alternate mesh engagement with one or the other of said fifth gear means and said sixth gear means in respective said end pivot positions of said plate;
toggle means for pivoting said plate at each said end pivot position for reversing a direction of motion of said shuttle along said rail.

The second and third gear means typically comprise substantially the same pitch diameter. The toggle means typically comprises an arm joined to said plate and extending radially from said plate, and adapted for interacting with one or another of fixed stops for pivoting said plate at each said end pivot position. This embodiment typically further comprises a pin joined to said frame and extending through a slot in the plate. The slot defines the end pivot positions of said plate. The first gear may be coupled to said rotational motor via a worm gear arrangement.

In another embodiment, the motive means comprises a fluid powered linear motor coupled to said reciprocating mechanism such as to provide at least axial reciprocating motion to said at least one suction opening. The linear motor may comprise at least one nozzle arrangement having a nozzle head comprising first and second fluid passages alternately in communication with a fluid source, said first and second fluid passages comprising fluid outlets at angles A and B, respectively to a tangential direction, said tangential direction being substantially parallel to said station when said system is installed and in operation with respect to said filter. The nozzle head may be slidingly mounted with respect to an arm between two end positions, said arm in communication with said fluid source, and comprising toggle means for sliding said nozzle head at each said end position for reversing a direction of motion of said at least one suction opening along said axis. These toggle means may comprise a tab joined to said nozzle head and extending away from a direction of said arm, and adapted for interacting with one or another of fixed stops for pivoting said plate at each said end pivot position. Angle A may be about +90° and angle B may be about -90°. The manifold is typically also adapted for rotation about said axis, and the motive means further comprises a rotational motor coupled to said reciprocating mechanism such as to provide a helical motion to said at least one suction opening. The system comprises a sliding bearing arrangement for mounting the system with respect to a housing comprising a said filter. The manifold is also adapted for rotation about said axis, and wherein said motive means further rotational motion to said manifold, such as to provide a net helical motion to said at least one suction opening. In this embodiment, angle A may be set at +α and angle B at -α, wherein the magnitude of α is substantially greater than 0° and less than about 90°. For example, the magnitude of α is about 45°. The system comprises a sliding bearing arrangement for mounting the system with respect to a housing comprising a said filter.

Optionally, and for all embodiments, the manifold may comprise a plurality of arms radiating from a conduit coaxial with said axis, and comprising a said suction outlet at the extremity of each said arm. The arms may be located singly or in groups at axial locations uniformly distributed at a pitch P. Preferably, the axial travel of said system in one or another direction along said axis is correlated to said pitch P. Typically, the number of revolutions of said manifold about said axis, the number of arms at each axial location, and the axial width of said suction openings are correlated to said pitch P. Preferably, the system further comprises a spray nozzle at each said arm adapted for spraying a fluid towards said station when the system is installed in a housing comprising said filter.

The present invention also relates to a self-cleaning filter assembly adapted for connection to a fluid source, comprising :
a housing comprising a filter accommodated therein, said filter having a fluid inlet station, said housing having at least one fluid inlet in communication with fluid inlet station, and at least one fluid outlet in communication with a fluid outlet station of said filter;
the self-cleaning system of the invention.

The filter is typically substantially tubular and said filter fluid inlet station is substantially cylindrical. The manifold typically comprises an outlet providing fluid communication between said at least one suction opening and a drain chamber. The drain chamber typically comprises at least one valve open to the atmosphere during operation of said self-cleaning system. The filter typically comprises a sintered filtering element. The assembly may further comprise a preliminary coarse filtering element upstream of said sintered filtering element. The assembly may further comprise at least one differential pressure detector coupled to said system and adapted for activating said system when the differential pressure detected between said filter inlet and said filter outlet is lower than a predetermined threshold. The assembly may further comprise at least one timer coupled to said system and adapted for activating said system at predetermined times. The assembly may further comprise a by-pass switch coupled to said system and adapted for selectively activating said system on user demand.

The motive means are typically powered by the operating fluid that it is desired to be filtered by said filter, the operating fluid typically being water.

The present invention is also directed to a method for cleaning a filter having a fluid inlet station, comprising:-
reciprocating a manifold along an axis with respect to said filter, said manifold comprising at least one suction opening adapted to be in proximity to said station and connectable to a suitable suction source for enabling foreign material to be removed from said filter when said system is installed and in operation with respect to said filter, wherein a fluid powered motive means propels said manifold along said axis, and a reciprocating mechanism for alternately changing the direction of motion of said manifold along said axis.

### BRIEF DESCRIPTION OF THE DRAWINGS

In order to understand the invention and to see how it may be carried out in practice, a preferred embodiment will now be described, by way of nonlimiting example only, with reference to the accompanying drawings, in which:
**Fig. 1** illustrates in longitudinal cross-sectional view a filter apparatus which incorporates a self-cleaning system according to the present invention;
**Fig. 2** illustrates, in fragmented longitudinal cross-sectional view, a first embodiment of a reciprocating mechanism used in the self-cleaning system of the invention;
**Figs. 3a to 3e** illustrates in greater detail the cylindrical cam used in the embodiment of Fig. 2: Fig. 3a - the cam in plan view; Fig. 3b - the cam in side view; Fig. 3d - the follower engaged in a groove in one direction; Fig. 3e - the follower engaged in a groove in an opposed direction to that of Fig. 3d; Fig. 3e - the follower changing direction with respect to the cam;
**Fig. 4** illustrates, in fragmented longitudinal cross-sectional view, a second embodiment of a reciprocating mechanism used in the self-cleaning system of the invention;
**Fig. 5** illustrates, in fragmented longitudinal cross-sectional view, a third embodiment of a reciprocating mechanism used in the self-cleaning system of the invention;
**Fig. 6** illustrates in isometric view the edge cam used in the embodiment of Fig. 5;
**Fig. 7** illustrates, in fragmented longitudinal cross-sectional view, a fourth embodiment of a reciprocating mechanism used in the self-cleaning system of the invention;
**Fig. 8** illustrates, in fragmented longitudinal cross-sectional view, a fifth embodiment of a reciprocating mechanism used in the self-cleaning system of the invention, wherein the mechanism is translating in one axial direction;
**Fig. 9** illustrates, in fragmented longitudinal cross-sectional view, the embodiment of Fig. 8, wherein the mechanism is translating in an axial direction opposed to that of Fig. 8;
**Fig. 10** illustrates, in a view taken along the longitudinal axis, the embodiment of Figs 8 and 9;
**Fig. 11** illustrates, in fragmented longitudinal cross-sectional view, a sixth embodiment of a reciprocating mechanism used in the self-cleaning system of the invention, wherein the mechanism is translating in one axial direction;
**Fig. 12** illustrates, in fragmented longitudinal cross-sectional view, the embodiment of Fig. 11, wherein the mechanism is translating in an axial direction opposed to that of Fig. 11;
**Fig. 13** illustrates, in fragmented longitudinal cross-sectional view, the nozzle mechanism of the embodiment of Figs. 11 and 12;
**Fig. 14** illustrates, in cross-sectional view, the embodiment of Fig. 13 taken along A-A;
**Fig. 15** illustrates, in fragmented longitudinal cross-sectional view, a nozzle mechanism of a seventh embodiment of a reciprocating mechanism used in the self-cleaning system of the invention; and
**Fig. 16** illustrates, in cross-sectional view, the embodiment of Fig. 15 taken along B-B.

### DETAILED DESCRIPTION OF THE INVENTION

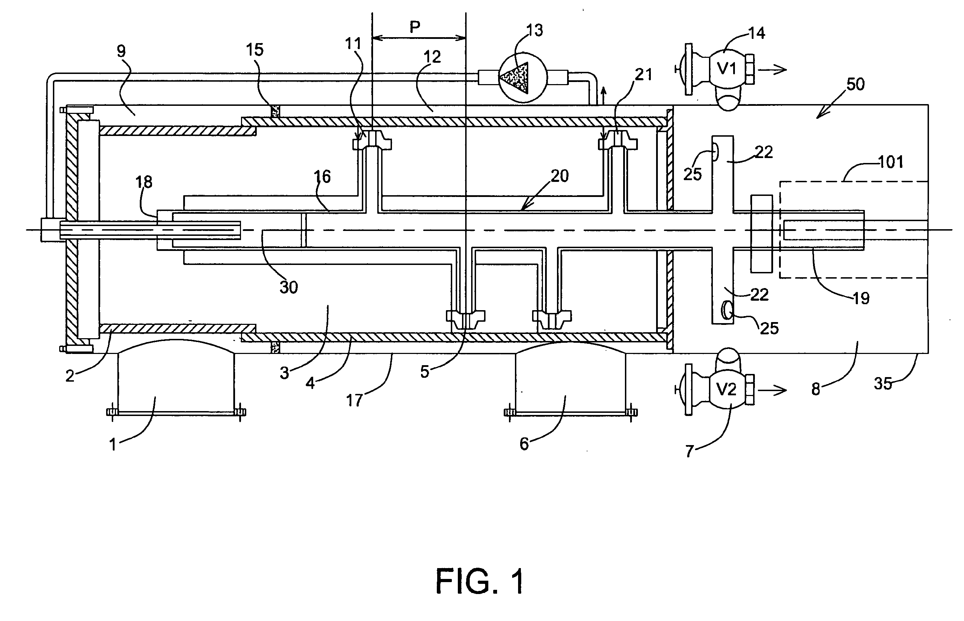

Fig. 1 illustrates a typical continuous filter apparatus which may incorporate a self-cleaning system according to the present invention. Such an apparatus may be similar to that described in US 6,267,879, the contents of which are incorporated herein in their entirety. Of course, the self cleaning system of the present invention may be incorporated in any suitable filtering apparatus or system, in a similar way to that described herein, *mutatis mutandis.*

The continuous filter apparatus, generally designated with the numeral 10, comprises an elongated tubular casing 17 having liquid inlet 1 for a connection with a liquid source that provides liquid to be filtered during filtering operation of the apparatus 10. The liquid inlet 1 feeds liquid from the liquid source to an annular first filtering chamber 9 that is in fluid communication with a second filtering chamber 3 via a cylindrical coarse screen 2, which is adapted for removing rough particles from the liquid. Pre-filtered liquid obtained downstream of the coarse screen 2 flows through a cylindrical sintered filtering element 4 to the filtered liquid chamber 12, and from there to the liquid outlet 6, which is adapted for a connection to a filtered liquid duct or reservoir (not illustrated). Advantageously, the first filtering chamber 9 and the filtered liquid chamber 12 are formed as two co-axial annular compartments within a single tubular envelope, separated one from the other by an annular bulkhead 15, which is located between the sintered filtering element 4 and the inner cylindrical surface of the tubular body 17.

A collector manifold assembly **20** comprises an elongated collection tubing **16** substantially co-axial with the sintered filtering element **4**, and further comprises a plurality of suction arms **5** radiating from tubing **16**. Typically, four to six arms may be provided, though less than four or more than six arms may also be provided. The arms **5** are located at stations on the tubing **16** that are axially spaced with respect to axis **30** in a typically uniform manner, at a pitch **P**. At each station, one or more arms **5** may be provided, and in any case, care is taken to distribute the arms **5** circumferentially about axis **30**, and axially on axis **30**, to provide static as well as dynamic balance with respect to axis **30**.

Each suction arm **5** comprises a suction aperture **21** that faces and is in close proximity to the inner cylindrical surface of the filter **4**, which can become clogged with filtered-out particles, and further comprises an adjacent spray nozzle **11** attached to the arm **5**. The suction apertures are in fluid communication with a suction source, via the hollow arms **5** and hollow tubing **16**, as will be further described herein. The manifold **20** is mounted for axial and rotational motion within the filter body **17** by means of suitable sliding bearing arrangements **18**, **19**, provided at the axial ends of the manifold **20**.

As will be described in greater detail hereinbelow, when the self-cleaning system is in operation, the manifold **20** is rotated and simultaneously reciprocated with respect to the axis **30.** In so doing, each of the suction apertures **21**, and their corresponding spray nozzles **11,** travel along a predetermined helical path in one axial direction and then along a reversed helical path back again to their original axial position with respect to the axis **30**. The total axial displacement of the manifold **20** in any direction along axis **30** is typically similar to or grater than the pitch **P**, and the axial displacement for every full revolution of the manifold **20** is related to the number of arms **5** at each station, and the effective width of the suction nozzles **21**.

The axial sliding movement in one direction is thus restricted between a minimum point at which the right-most pair of the suction apertures **21** and spraying nozzles **11** (Fig. **1**) is brought to the right end of the sintered filter **4**, and a maximum point at which the left-most pair of the suction members and spraying nozzles is brought to the left end of the sintered filter **4**.

In this manner, during operation of the self-cleaning system, as the manifold **20** is rotated and displaced along axis **30** in one direction, the nozzles **21** are brought in close proximity to every part of the inside cylindrical surface of filter element **4**, which is thus fully scanned, and a second time again as the manifold is returned in the opposite direction to its original axial position. Thus, the arrangement enables each part of the filter element **4** to be cleaned of sediment in one to and fro scan of the cleaning system.

Simultaneously with the helical movement of the suction manifold **20**, a booster-pump **13**, fed with liquid taken from the filtered liquid chamber **12**, is adapted for generating a relatively high liquid pressure at the spraying nozzles **11** during operation of the cleaning system. Thus, a liquid stream is sprayed from each of the nozzles **11** toward the inner surface of the sintered filter **4**, vibrating the dirt sediment and particles that may be trapped within the porous filter **4**. At the same time, liquid is sucked into the suction apertures **21** of the manifold **20**, back-washing and sweeping away the dirt from the filter **4**. Material sucked from the chamber **3** into the apertures **21** flow under pressure to a collection chamber 8 via drain apertures **25** that are provided at one end of the tubing **16**. The suction operation is generated automatically by the pressure difference that exists between the relatively high pressure liquid upstream of the filter **4**, i.e., in the second filtering chamber **3**, and free atmospheric pressure, via openings **25** the draining valves **7**, **14**, which are in open position to the atmosphere during the cleaning operation.

A cleaning operation for the cleaning system may be activated by means of a differential pressure sensor or gauge (not illustrated) adapted for identifying a predetermined differential pressure between the final filtering chamber **3** and the filtered liquid chamber **12**, indicating that a certain amount of sediments blocks the sintered filter, thus a cleaning operation is required. A programmable logic controller (not illustrated) may be utilized for controlling the operation of the cleaning system for limited periods and/or according to a timer. The timer (not illustrated) may be adapted for activating the cleaning system periodically for preventing sedimentation in case of the filtration of a relatively clean liquid which enables the differential pressure sensor to activate the cleaning system only infrequently. Both, the differential pressure sensor operating mode and the timer operating mode, may be by-passed by a continuous-operation-switch (not illustrated) which enables a user to selectively activate the cleaning system whenever desired, independently of the actual conditions of the filter, or the time elapsed from the previous cleaning cycle.

The drain apertures **25** are configured as reaction nozzles provided at the radial end of an additional pair of arms **22** that are diametrically joined to an axial portion of the tubing **16** that is within the draining chamber **8**. The apertures **25** are arranged in the same angular direction with respect to axis **30**. Thus, during operation of the cleaning system, dirt and liquid are sucked through the apertures **21** and are ejected out of the drain nozzles **25**, which provide a reaction couple causing rotation of the manifold **20** about the axis **30**. Thus, the arrangement of drain nozzles **25** and arms **22** comprises a hydraulic motor, herein designated with the numeral **50**.

Suitable liquid-driven axial reciprocation motive means according to the present invention, schematically illustrated in Fig. **1** by a dotted box **101**, provide reciprocating axial motion to the manifold **20**, typically during rotation of thereof.

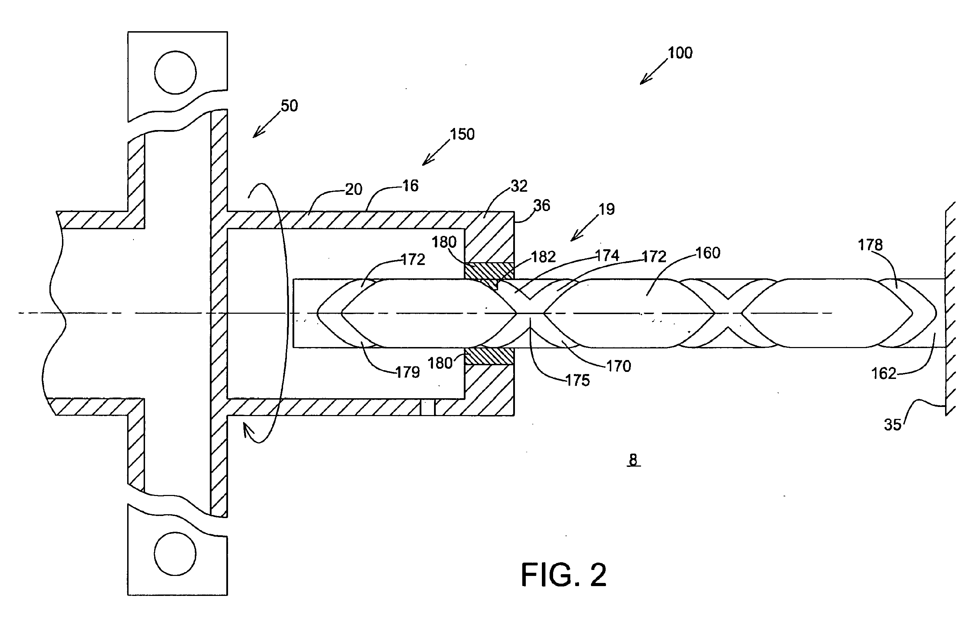

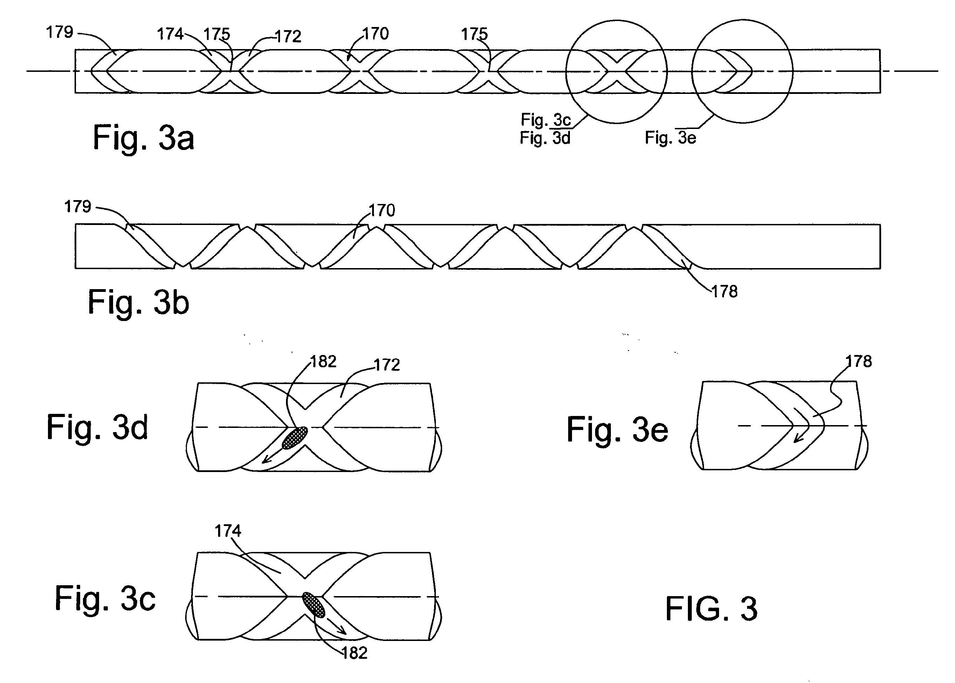

Referring to Figs. 2 and 3a to 3e, a first embodiment of the cleaning system of the present invention, generally designated with the numeral **100**, comprises a manifold **20** including hydraulic motor **50** as described above, and a reciprocating mechanism **150**. The reciprocating mechanism is coupled to the motor 50 and adapted for converting rotational motion provided by the motor **50** into reciprocating linear motion along axis 30. Thus, the helical motion that may be provided to the suction apertures **21** and spray nozzles **11** are powered by the hydraulic motor **50**.

The reciprocating mechanism **150** comprises a cylindrical cam **160** axially and rigidly cantilevered at one end **162** thereof to the longitudinal end plate **35** of the drain chamber **8**. Referring in particular to Figs. **3a** and **3b**, the cylindrical cam **160** comprises a single, endless groove **170** that comprises a clockwise helical section **172**, and a parallel but anticlockwise helical section **174**, which cross at periodic intersections **175**, and joined at their axial ends thereof by respective connecting corner intersections **178**, **179**.

The end **32** of the conduit **16** of manifold **20** comprising the motor **50** further comprises an axial opening **36** adapted for reciprocably and rotatingly receiving the free end **164** of the cylindrical cam **160** by means of said sliding bearing arrangement **19**. The sliding bearing arrangement **19** comprises a suitable collar **180** mounted to said axial opening **36**. The inner cylindrical surface of the collar is adapted for rotation over the roller cam **160**, and further comprises a follower **182** radially projecting towards said axis **30** and engaged with respect to said grove **170**.

As the manifold **20** is rotated about axis **30** under the action of the liquid motor **50**, the end **32** rotates about the static cylindrical cam **160**, and the follower **182**, together with the manifold **20**, is constrained to follow a path defined by the endless groove **170**, as follows. Starting at free end **164**, the follower **182** translates along groove **174** in an axial direction towards end **162**, as the follower **182** also revolves around the cam **160**, as illustrated in Fig. 3c. At end **178**, the follower **182** changes axial direction (**Fig. 3e**) and enters groove **172**, translating the follower 182 towards free end **164**, as illustrated in Fig. 3d, where at the end **179**, the follower **182** again changes axial direction as it enters groove **172** once again. The number of revolutions required for the follower **182** to travel from end **179** to end **178** is related to the relative width of the suction apertures **21** with respect to the pitch **P**.

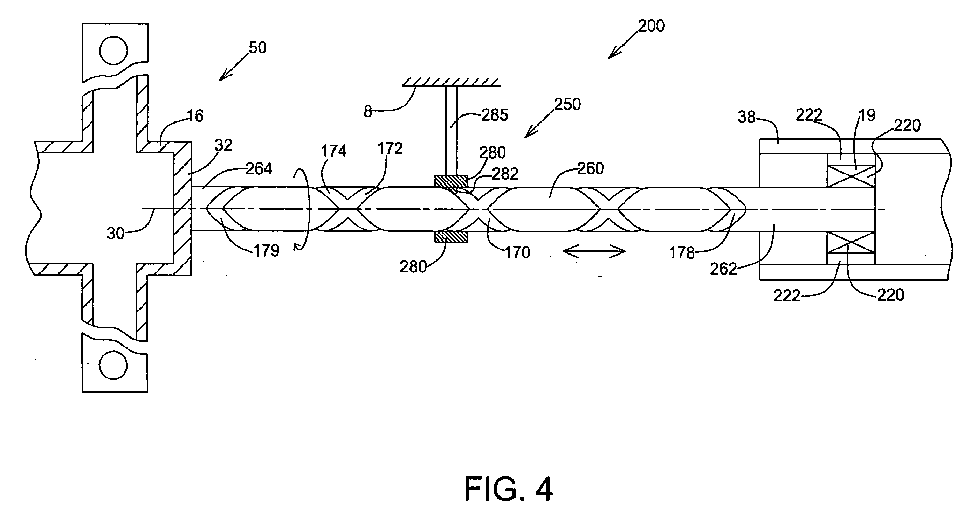

Referring to Fig. **4**, a second embodiment of the cleaning system of the present invention, generally designated with the numeral **200**, is similar to the arrangement described above for the first embodiment, *mutatis mutandis,* with the main difference that in the second embodiment the cylindrical cam, herein designated with the numeral **260**, oscillates with the manifold **20**, and the follower **282** is statically mounted to the chamber **8**. Thus, the cleaning system **200** comprises a manifold **20** a reciprocating mechanism **250** that is coupled to the motor **50** and adapted for converting rotational motion provided thereby into reciprocating linear motion along axis **30**.

The reciprocating mechanism **250** comprises said cylindrical cam **260**, axially and rigidly cantilevered at one end **264** thereof to end **32** of the conduit 16 of manifold **20** comprising the motor **50**, the cam **260** comprising an endless groove **170**, as described for the first embodiment, *mutatis mutandis.*

The end **35** of the chamber **8** further comprises a tubular sleeve **38** adapted for reciprocably and rotatingly receiving the free end **262** of the cylindrical cam **260** by means of said sliding bearing arrangement **19**. The sliding bearing arrangement **19** in this embodiment comprises a bearing **220**, the inner rotating shell of which is mounted at the end **262**, and the outer static shell being statically mounted to a sliding ring **222**, which is adapted for sliding within said sleeve **38**.

The draining chamber **8** further comprises a suitable collar **280** statically mounted to the chamber via strut **285**. The inner cylindrical surface of the collar is adapted for rotation over the roller cam **260**, and further comprises a follower **282** radially projecting towards said axis **30** and engaged with respect to said grove **170**. Alternatively, the collar **280** may be mounted in the sleeve **38**. Alternatively, the collar **280** may be incorporated in the bearing arrangement 19, similar to that described for the first embodiment, *mutatis mutandis.*

Thus, as the manifold **20** is rotated about axis **30** under the action of the liquid motor **50**, the end **32** rotates together with cylindrical cam **260**, and the follower **282** causes the cam **260**, together with the manifold **20**, to follow a path defined by the endless groove **170,** as follows. Thus, while rotating about axis **30,** the cam **260** translates along groove **174** in an axial direction towards end **178** with respect to follower **282,** and changes direction thereat to present groove **172** to the follower 282, translating the cam 260 back so that free end **164** approaches follower **220,** in a cyclic manner, to oscillate the cam **260** with respect to the follower **282.** In a similar manner to that described for the first embodiment, the number of revolutions required for the cam **260** to travel with respect to the follower **182**, from end **179** to end 178, is related to the relative width of the suction apertures **21** with respect to the pitch **P**.

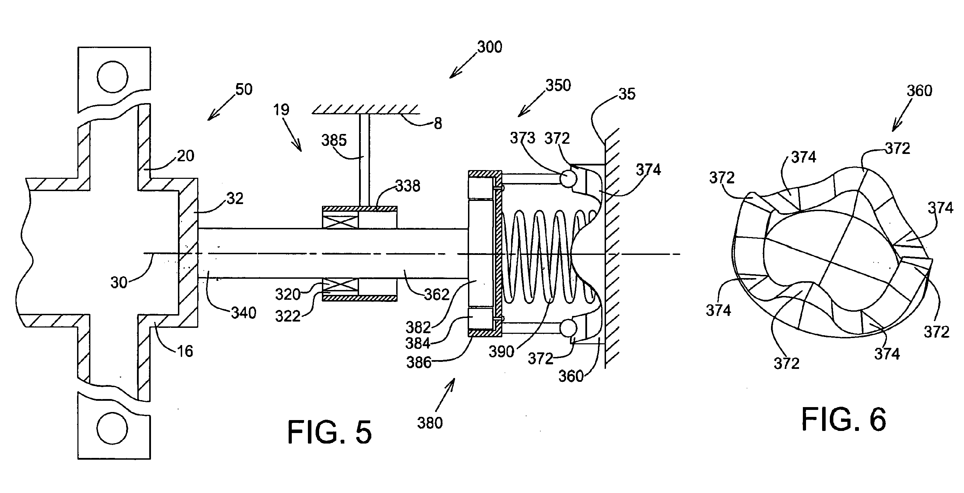

Referring to Fig. 5, a third embodiment of the cleaning system of the present invention, generally designated with the numeral **300,** comprises a manifold **20** including hydraulic motor **50** as described above, and a reciprocating mechanism **350.** The reciprocating mechanism **350** is coupled to the motor **50** and adapted for converting rotational motion provided by the motor **50** into reciprocating linear motion along axis **30**. Thus, the helical motion that may be provided to the suction apertures **21** and spray nozzles **11** are powered by the hydraulic motor **50.**

The reciprocating mechanism **350** comprises an end cam **360** axially and rigidly mounted to end plate **35** of the drain chamber **8**. Referring in particular to Fig. 6, the end cam **360** comprises a single, endless undulating contour **370** that a number of peaks **372** smoothly joined with a number of intercalated troughs **374**, arranged in an annular manner. In the illustrated example of Figs. 4 and 5, four identical troughs **374** and four identical peaks **372** are provided, and the peaks and troughs merge into one another in a substantially sinusoidal manner in the circumferential direction. The end cam **360** is coaxially aligned with axis **30**.

The end **32** of the conduit 16 of manifold **20** comprising the motor **50** further comprises a shaft **340** axially mounted thereto. The draining chamber **8** comprises a tubular sleeve **338** statically mounted to the chamber via strut **385**. the sleeve **338** is adapted for reciprocably and rotatingly receiving the shaft **340** by means of said sliding bearing arrangement **19**. The sliding bearing arrangement **19** in this embodiment comprises a bearing **320**, the inner rotating shell of which is mounted to shaft **340**, and the outer static shell being statically mounted to a sliding ring **322**, which is adapted for sliding within said sleeve **338**.

At the free end **362** of the shaft **340** is mounted a sun gear **382** of a planetary gear arrangement **380**, which comprises a number of planetary gears **384** mounted for rotation on planetary carrier **386**. The planetary carrier **386** comprises one or a number of followers **373** axially projecting therefrom towards the cam **370**. A spring **390**, mounted to the center of the cam **360** and to the opposed center of the planetary carrier **386**, forces axial contact between the follower **373** and the cam **370**. The spring **390** is mounted in such a way, and/or is configured, such as not to become tangled or overwound as the planetary gear **386** revolves with respect to the cam **370**. Alternatively, the spring may be replaced by a rail arrangement that constrains the follower **373** to follow the cam **370** as it rotates about the same.

As the manifold **20** is rotated about axis **30** under the action of the liquid motor **50**, the end **32** rotates about the static end cam **360**, and the follower **373**, together with the gear arrangement **380** and manifold **20**, is constrained to follow a path defined by the endless contour **370**, as follows. Starting at one trough **374**, the follower **373** translates in an axial direction away from end **35** as the follower **373** also revolves partially around the cam **360** until it reaches the adjacent peak **372**. Then, the follower **373** changes axial direction and towards end **35** as it approaches the next trough **374**. The number of revolutions required for the follower **373** to travel between adjacent troughs **374**, and the gear ratios of gear arrangement **380**, are related to the relative width of the suction apertures **21** with respect to the pitch **P**.

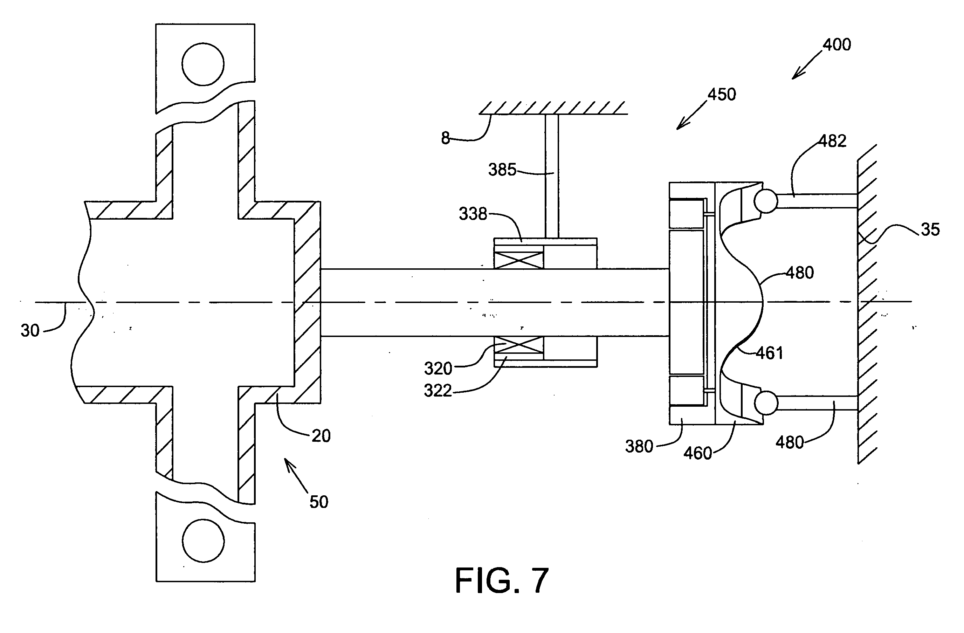

Referring to Fig. 7, a fourth embodiment of the cleaning system of the present invention, generally designated with the numeral **400**, is similar to the arrangement described above for the third embodiment, *mutatis mutandis,* with the main difference that in the fourth embodiment the end cam, herein designated with the numeral **460**, oscillates together with the gear arrangement **380**, and thus with the manifold **20**, and the follower **482** is statically mounted to the end wall **35** of chamber **8**. In the illustrated embodiment, the cam **460** comprises a rail arrangement **461** that constrains the follower **482** to follow the contour **480** as it revolves with respect to axis **30**. Operation of this embodiment is similar to that of the third embodiment, *mutatis mutandis.*

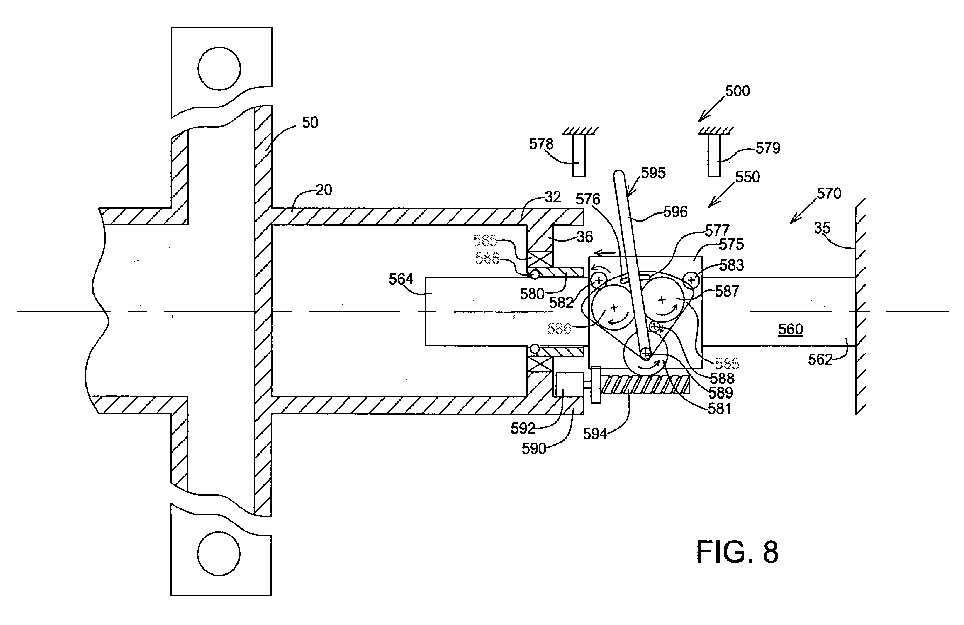

Referring to Figs. **8** to 10, a fifth embodiment of the cleaning system of the present invention, generally designated with the numeral **500**, comprises a manifold **20** including hydraulic motor **50** as described above, and a reciprocating mechanism **550**. The reciprocating mechanism is coupled to the motor **50** and adapted for converting rotational motion provided by the motor **50** into reciprocating linear motion along axis **30**. Thus, the helical motion that may be provided to the suction apertures **21** and spray nozzles **11** are powered by the hydraulic motor **50**.

The reciprocating mechanism comprises a rail **560** of substantially rectangular cross-section axially and rigidly cantilevered at one end **562** thereof to end plate **35** of the drain chamber **8**.

The end **32** of the conduit 16 of manifold **20** comprising motor **50** further comprises an axial opening **36** adapted for reciprocably and rotatingly receiving the free end **564** of the rail **560** by means of sliding bearing arrangement **19**. In this embodiment, the sliding bearing arrangement comprises a suitable collar **580** mounted to said axial opening via bearing **585**. The collar **580** comprises an inner rectangular opening and sliding guides **586** for sliding the collar axially along the said rail **560**, and an outer typically cylindrical surface for connection to the inner race of the bearing **585** which remains static when the outer race of the bearing rotates with the manifold **20**. Thus the outer race of the bearing **585** is fixed to the axial opening **36**.

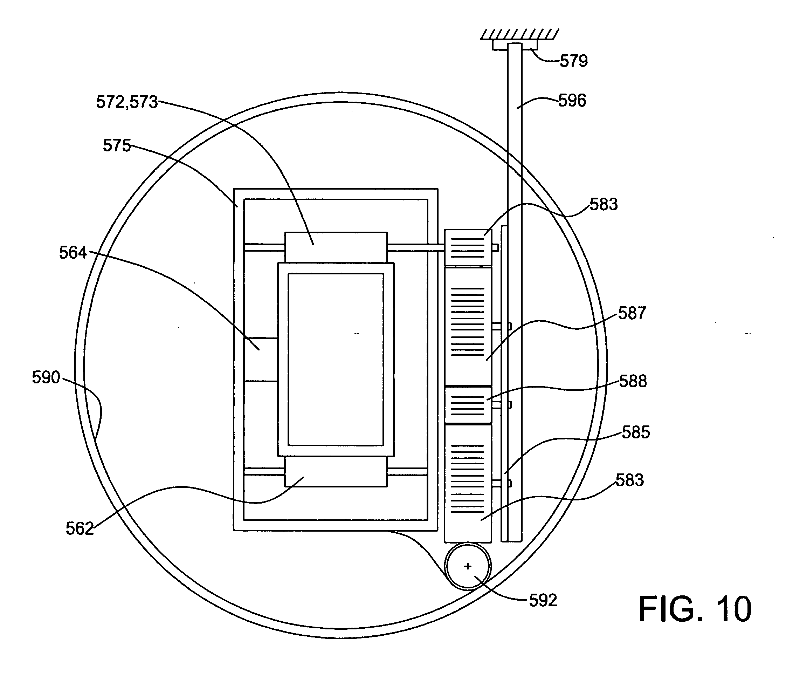

Referring particularly to Fig. 10, the reciprocating mechanism **550** further comprises a shuttle mechanism **570**, in the form of a frame **575** comprising two drive rollers **572, 573** rotatingly mounted thereto, and used alternately for driving the shuttle in one direction or the other along the rail **560.** Each of the drive rollers **572, 573** is axially mounted to a gear wheel **582, 583,** respectively. The frame **575** is connected to the collar **580**.

Alternatively, the upper surface of the rail **560** may comprise a rack, and the drive rollers **572, 573** replaced with drive pinions for better traction of the shuttle **570** with respect to the rail **560.**

Alternatively, the rail may be of circular section, for example, and the rollers are appropriately shaped to enable rolling over a convex cylindrical surface.

As illustrated in Fig. 10, the shuttle **570** may further comprise additional loose guide rollers **564** mounted on the frame **575** for free rotation with respect to the lower and vertical surfaces of the rail.

A plate **585** is pivotably mounted to the frame **575** at pivot **589**. The plate **585** can pivot about pivot **589** about a pivot arc between two end positions, defined by a stop pin **576** mounted to plate **585** and sliding in an arcuate guide slot **577** in frame **575**. A first gear wheel **581** is rotatingly mounted to the plate at pivot **589**, and is in mesh with a gear wheel **586** via intermediate gear wheels **587** and **588**, all of which are carried by the plate **585**. Wheels **586** and **587** are centered on an arch of constant radius about pivot **589**, and wheels **581, 588** and **587** have their centers rectilinearly aligned. Wheels **586** and **587** have the same pitch diameter, and the said pivot arc of the plate **585** is such that in either of the end positions, one or the other of wheels **586** and **587** meshes with one or the other of gear wheels **582, 583,** respectively.

Alternatively, wheels **581** and **587** could be engaged one with the other by means of a belt, rather than wheel **588**, *mutatis mutandis.*

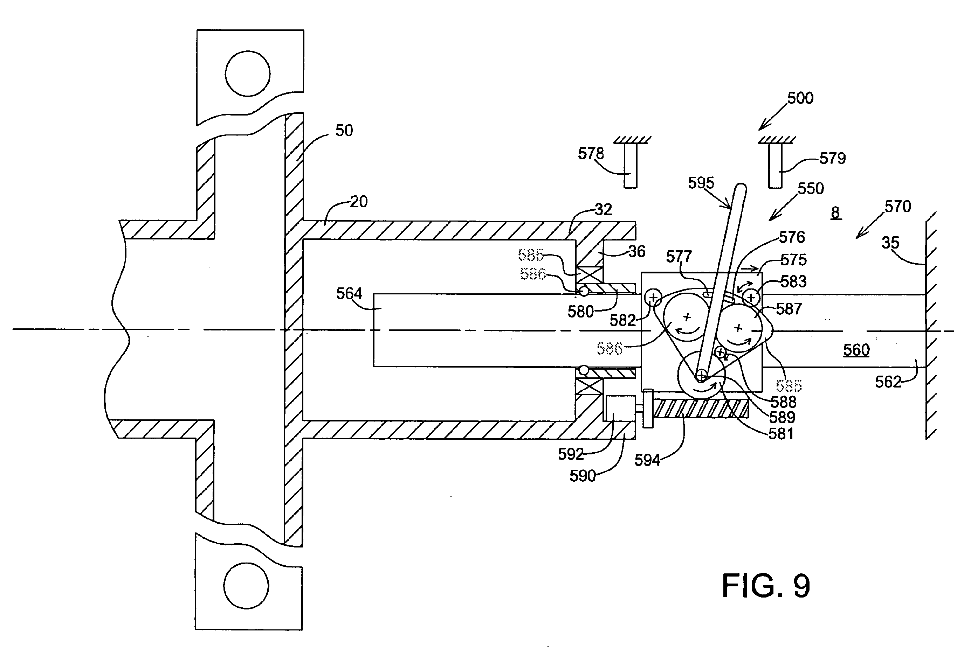

Thus, referring to Fig. **8**, when the plate **585** is at the end position such that wheel **586** is engaged with wheel **582**, counterclockwise rotation of wheel **581** produces counterclockwise rotation of wheel **582**, which causes the shuttle **570** to travel away from end plate **35**. Conversely, and referring to Fig. **9**, when the plate **585** is at the end position such that wheel **587** is engaged with wheel **583**, counterclockwise rotation of wheel **581** produces clockwise rotation of wheel **583**, which causes the shuttle **570** to travel towards the end plate **35**.

The end **32** further comprises an internal gear **590** which meshes with gear wheel **592** carried on frame **575**. A worm gear **594** axially connected to wheel **592** meshes with wheel **581**.

The shuttle **570** further comprises a toggle mechanism '**595** for changing direction thereof between two axially distanced stops **578, 579** mounted in the drain chamber **8**. The toggle mechanism **595** comprises an arm **596** fixed to plate **585** and radially extending from pivot **589** such as to engage with one or another of stops **578, 579** when the shuttle **570** reaches one or another of the axial end positions thereof.

Thus, as the manifold **20** is rotated about axis **30** under the action of the liquid motor **50**, the end **32** rotates about the rail **560**, and the shuttle **570**, together with the collar **580** and manifold **20**, is constrained to follow a reciprocating path with respect to the rail **560** as follows. Starting at or near free end **564**, the arm **596** is pressed against stop **578** such as to pivot the plate **585** to the position illustrated in Fig. **9**, so that wheel **587** is meshed with wheel **583**, and wheel **586** is disengaged from wheel **582**. The rotation of the manifold **20** causes wheel **581** to turn in a counterclockwise direction by virtue of internal gear **590**, wheel **592** and worm gear **594**. In turn, wheel **581** turns wheel **583** in a clockwise direction, via wheels **588** and **587**, which rotates drive roller **573**, translating the shuttle **570** towards the end plate **35**. When the shuttle **570** nears the end plate **35**, arm **596** presses against the stop **579**, and the momentum of the shuttle **570** carries the same a little further such as to pivot the arm **579** to the position illustrated in Fig. **8**. Now, wheel **586** is meshed with wheel **582**, and wheel **587** is disengaged from wheel **583**. Thus, while the manifold **20** continues to rotate in the same direction, counterclockwise rotation of wheel **581** results in counterclockwise rotation of wheel **582**, which rotates drive roller **572**, translating the shuttle **570** away from the end plate **35**. When the shuttle **570** nears the free end **564,** arm **596** now presses against the stop **578,** and the momentum of the shuttle **570** carries the same a little further such as to pivot the arm **579** back to the position illustrated in Fig. 9. So long as the motor **50** is rotating, the shuttle **570** will be translating the manifold **20** in one or the other axial directions. The full axial travel in either direction for the shuttle **570** is typically correlated to the dimension of pitch **P**, and in some embodiments may be set at about equal to the dimension of **P**.

The number of revolutions required for the shuttle **570** to travel between stops **578, 579,** and the gear ratios provided by gears **590, 592, 594, 581, 588, 587, 588, 582 583,** are related to the relative width of the suction apertures **21** with respect to the pitch **P**.

In yet other embodiments, rotation power may be provided by non-liquid based power sources, for example an electric motor, and the rotational power used for providing reciprocating axial motion in a similar manner to that described above, *mutatis mutandis.*

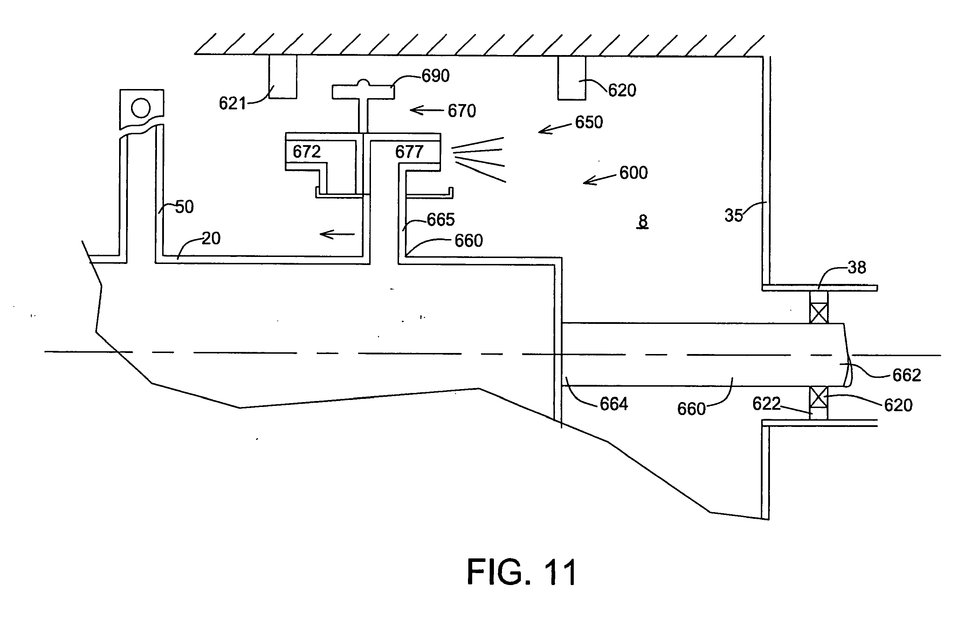

Referring to Figs. 11 to 14, a sixth embodiment of the cleaning system of the present invention, generally designated with the numeral **600**, comprises a manifold **20** including hydraulic motor **50** as described above, and a reciprocating mechanism **650**.

In this embodiment, the reciprocating mechanism **650** may operate independently of the motor **50**, and in fact the system may actually operate without the need for the rotational motor **50**. In such a case, the arms **5** are connected at their radial ends to an annular collector (not shown) and the suction openings **21** may be in the form of a circumferential slit opposite to the inner cylindrical surface of the filter, or in the form of circumferentially-located closely-spaced discrete openings. In this case, it is only necessary to provide a reciprocal axial motion to the manifold **20** so that the full filter is scanned during the self-cleaning process, since the full inner circumferential periphery of the filter is covered by the annular collector at any axial position thereof. Accordingly, such an embodiment does not require the filter 4 to be cylindrical, and in fact the filter can have any cross-sectional shape, for example square, so long as the aforementioned "annular" collector comprises a complementary shape such that the suction openings, now in the form of a peripheral slit, are opposite to the inner surface of the filter.

Nevertheless, the reciprocating mechanism is advantageously coupled with the motor **50**, and the combination is thus adapted for providing rotational motion and concurrent reciprocating linear motion along axis **30**. Thus, the helical motion that may be provided to the suction apertures **21** and spray nozzles **11** are powered by the hydraulic motor **50** and reciprocating mechanism **650**.

A cylindrical shaft **660** is axially and rigidly cantilevered at one end **664** thereof to end **32** of the conduit **16** of manifold **20** comprising the motor **50**. The end **35** of the chamber **8** further comprises a tubular sleeve 38 adapted for reciprocably and rotatingly receiving the free end **662** of the shaft **660** by means of said sliding bearing arrangement **19**. The sliding bearing arrangement **19** in this embodiment comprises a bearing **620**, the inner rotating shell of which is mounted at the end **662**, and the outer static shell being statically mounted to a sliding ring **622**, which is adapted for sliding within said sleeve **38**.

The reciprocation mechanism **650** comprises a linear dual-direction fluid motor **660,** in the form of a plurality of arms **665** radially projecting from the end **32** of the conduit **16** of manifold **20**. At the tip of each arm **660** a bi-directional nozzle **670** is provided, having two separate fluid passages **672, 677,** each of which has an inlet, **673, 678,** respectively, and an outlet, **674, 679,** respectively. The inlets **673, 678** are coplanar, and each can be alternately aligned with the mouth **667** at the free end of the arm **665** by sliding the nozzle **670** axially along rail **680** in one direction or the other. The rail **680** comprises blanks **684, 685** for blocking the one or other of the inlets **673, 678,** respectively, when the other inlet is aligned with the mouth **667**. The outlets **674, 679** are aligned parallel to axis **30**, but in axially opposed directions. The nozzle **670** further comprises a tab arrangement **690** that alternately cooperates with one or another of a pair of spaced annular stop rings **610, 620** in chamber **8** to axially displace the nozzle **670** to a position in which one or another of the inlets **673, 678** is aligned with mouth **667**. The tab arrangement **690** preferably comprises a free rolling wheel **695** that is mounted to the radial end of nozzle **670**, with the axis of rotation radially aligned with respect to axis **30**. The wheel **695** comprises a tread surface **696** adapted for alternate contact with one or the other of said rings **610, 620**.

Thus, as the manifold **20** is rotated about axis **30** under the action of the liquid motor **50**, the end **32** rotates together with shaft **660**, and the linear motor **660**, together with the manifold **20**, is constrained to follow a reciprocating path as follows. Starting at or near end plate **35**, the tab wheel **695** is pressed against stop **620** such as to slide the nozzle **670** to the position illustrated in Fig. **11**, where inlet **677** is aligned with mouth **667**, and inlet **673** is blocked. As liquid is ejected from outlet **679** in an axial direction towards end **35**, a reaction force propels the manifold **20** in an axial direction away from end **35**, at the same time as the manifold is rotating by virtue of the action of motor **50**. Accordingly, the mass flow of liquid must be sufficient to provide motive power to motor **50** and liner motor **660**.

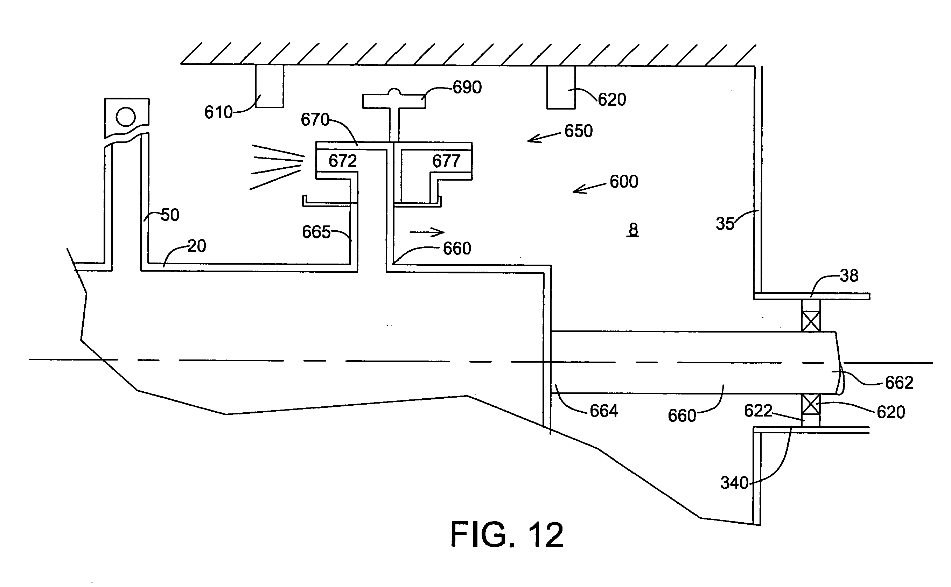

When the manifold **20** has nears its maximum displacement away from the end plate **35**, wheel **695** presses against the stop **610**, and the momentum of the manifold **20** may carry the same a little further, such as to slide the nozzle 670 to the position illustrated in Fig. 12. This operation is particularly facilitated by the rotation of wheel **695** along the annular ring **610** as the nozzle **670** is revolving about axis **30** under the action of motor **50**. Now, inlet **673** is aligned with mouth 667, and inlet **677** is blocked. As liquid is ejected from outlet **674** in an axial direction away from end **35**, a reaction force propels the manifold **20** in an axial direction towards end **35**, at the same time as the manifold is rotating by virtue of the action of motor **50**. When the manifold **20** has nears its minimum displacement with respect to the end plate **35**, wheel **695** presses against the stop **620**, and the momentum of the manifold **20** may carry the same a little further, such as to slide the nozzle **670** back to the position illustrated in Fig. 11.

So long as the linear motor **660** is operating, it will be translating the manifold **20** in one or the other axial directions. The full axial travel in either direction for the manifold **20**, slightly more than the axial displacement between stops **610, 620,** is typically correlated to the dimension of pitch **P**, and in some embodiments may be set similar to the dimension of **P**.

Optionally, the linear motor **660** may be adapted to operate such that the outlets **674, 679,** or another part of the nozzle **670** alternately cooperates with the ring stops **610, 620,** and in such a case the tab arrangement **690** is not required and may be dispensed with.

Clearly, if the motor **50** is disabled; for example by blocking apertures **25**, it is still possible for the linear motor **660** to provide reciprocating movement to the manifold.

Alternatively, it is possible to slidingly mount the nozzles **670** to the arms **22** of the motor **50**, by modifying the radial ends of the arms in a similar manner to that described for the radial ends of arms **665**, *mutatis mutandis.* Such a modification to the sixth embodiment requires less parts overall, and shortens the axial dimension of the self-cleaning system. Optionally, the tangential nozzles **25** may be incorporated in the nozzle **670**, and in fact each one of the said passages **672, 677** may comprise a said tangential nozzle **25** aligned in the same direction.

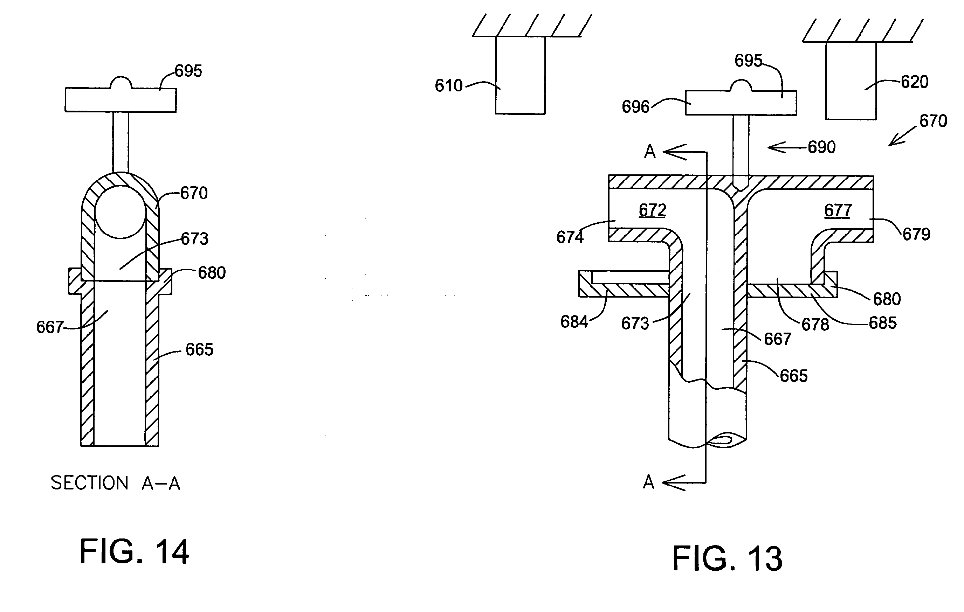

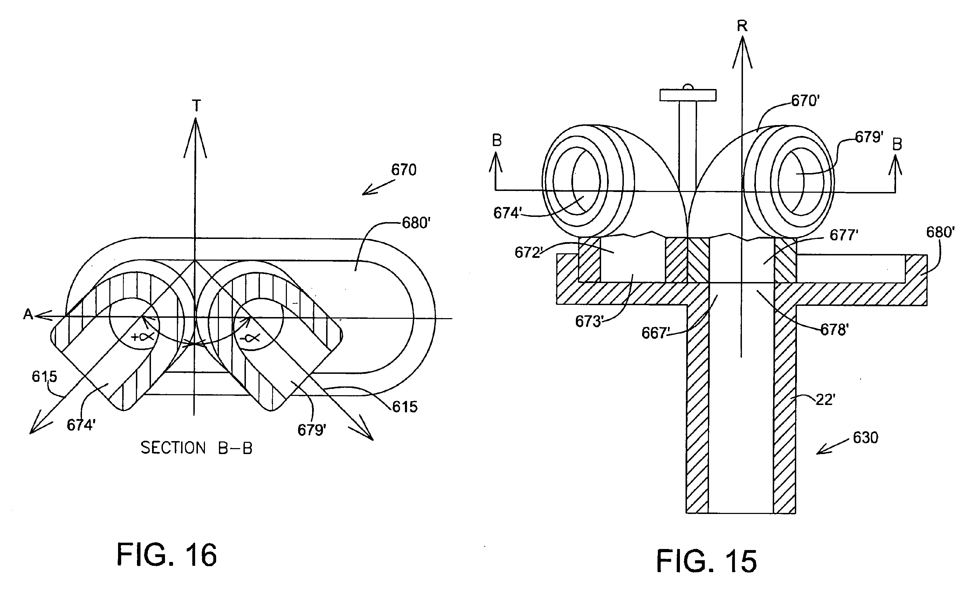

Alternatively, and referring to Figs. 15 and 16, a seventh embodiment of the cleaning system of the present invention, generally designated with the numeral **700**, is similar to the arrangement described above for the sixth embodiment, *mutatis mutandis,* with the following differences. In the seventh embodiment the rotational motor **50** and the linear motor **660** may be further combined such that arms **22**' of the combined motor **630** each comprise a vectored nozzle arrangement **670**' that provides a jet of liquid providing a reaction force component in the tangential direction **T** for providing rotation, and reaction force component in the axial direction A for providing axial displacement. Thus, the nozzle **670'** comprises two separate fluid passages **672**', **677'**, each of which has an inlet, **673'**, **678'**, similar in construction and operation with respect to rail **680** as described with respect to the embodiment illustrated in Figs. 13 and 14, *mutatis mutandis.* The respective outlets **674'**, **679'**, however, are aligned with their axes **615** at angles +α and -α to the tangential direction **T**, so that each nozzle may provide (in turn) a tangential reaction force component in the same tangential direction **T**, and an axial reaction force component parallel to axis **30**, but in axially opposed directions. The nozzle **670'** further comprises a tab arrangement **690'** similar to that described in connection with tab **690** of the sixth embodiment, *mutatis mutandis.* Thus, in a similar manner to that described for the embodiment illustrated in Figs 11 to 14, *mutatis mutandis,* when the tab 690' presses against ring stop **610**, the nozzle **670'** is displaced so that inlet **677**' is blocked, and inlet **673'** is aligned with mouth **667'** of arm **22'**. The action of the liquid exiting passage **672'** provides a reaction force that continues to turn the manifold **20** about axis **30**, and that propels the same towards the end **35**. When the tab **690'** eventually presses against the second stop ring **320**, the nozzle **670**' slides with respect to rail **680'** to the position illustrated in Figs. **15** and **16**, so that inlet **673'** is blocked, and inlet **677'** is aligned with mouth **667'** of arm **22'**. The action of the liquid exiting passage **672'** provides a reaction force that still continues to turn the manifold **20** about axis **30**, but that now propels the same away from the end **35**.

In other embodiments, rotational motion may be provided by a liquid turbine arrangement, for example, and the rotational power coupled to a reciprocating axial motion in a similar manner to that described above, *mutatis mutandis.*

It should be noted that the word "comprising" as used throughout the appended claims is to be interpreted to mean "including but not limited to".

While there has been shown and disclosed exemplary embodiments in accordance with the invention, it will be appreciated that many changes may be made therein without departing from the spirit of the invention.

## Claims

1. A self-cleaning system for use with a filter having a fluid inlet station, comprising:-
a manifold mountable at least for reciprocation along an axis with respect to said filter and comprising at least one suction opening adapted to be in proximity to said station and connectable to a suitable suction source for enabling foreign material to be removed from said filter when said system is installed and in operation with respect to said filter;
fluid powered motive means for propelling said manifold along said axis; and
a reciprocating mechanism for alternately changing the direction of motion of said manifold along said axis.

2. The system according to claim 1, wherein said manifold is also adapted for rotation about said axis, and said motive means comprises a rotational motor coupled to said reciprocating mechanism such as to provide a helical motion to said at least one suction opening.

3. The system according to claim 2, wherein said rotational motor comprises at least one arm radiating from said manifold and having a nozzle outlet in communication with said at least one suction opening, said nozzle outlet being tangentially disposed with a direction of rotation of said motor.

4. The system according to claim 2, wherein said rotational motor is coupled to said reciprocating mechanism to provide an endless helical motion to said at least one suction opening.

5. The system according to any one of claims 1 to 4, wherein said system comprises a sliding bearing arrangement for mounting the system with respect to a housing comprising a said filter.

6. The system according to claim 2, wherein said rotational motor and said reciprocating mechanism comprise a follower coupled to a cylindrical or end cam arrangement, and wherein said cam comprises an endless track adapted for enabling the follower to reciprocate along said axis in response to a relative rotation between said cam and said follower about said axis.

7. The system according to claim 6, wherein said cylindrical or end cam is fixedly mountable to a housing comprising said filter and said follower is mounted to said manifold for rotation therewith, when the system is installed with respect to said filter.

8. The system according to claim 6 or 7, wherein said follower is fixedly mountable to a housing comprising said filter and said cylindrical or end cam is mounted to said manifold for rotation therewith, when the system is installed with respect to said filter.

9. The system according to claim 6 or 7, wherein said follower is mounted to a gear arrangement coupled to said rotational motor.

10. The system according to claim 9, wherein said gear arrangement comprises a planetary gear arrangement, wherein said rotational motor is mounted for rotation with a sun gear and said follower is mounted for rotation with an orbital gear of said planetary gear arrangement.

11. The system according to claim 2, wherein said rotational motor and said reciprocating mechanism comprise a shuttle arrangement mounted on an axial rail support for axial translation with respect thereto, said rail being fixedly mountable to a housing comprising said filter when the system is installed with respect to said filter, said shuttle being coupled to said rotational motor such that a rotation of said motor about said axis provides a translation of said shuttle along said rail.

12. The system according to claim 11, wherein said shuttle comprises:
a frame axially displaceable with respect to said rail and comprising a pivoting plate having two end pivot positions, said plate comprising a first gear means mounted for rotation at the pivot thereof and coupled to said rotational motor, said pivoting plate further comprising second and third gear means in mesh engagement with the other, wherein said second gear means is in mesh engagement with said first gear means via a fourth gear means carried on said pivoting plate;
first moving means coupled to a fifth gear means and second moving means coupled to a sixth gear means, each one of said second and third gear means being in alternate mesh engagement with one or the other of said fifth gear means and said sixth gear means in respective said end pivot positions of said plate; and
toggle means for pivoting said plate at each said end pivot position for reversing a direction of motion of said shuttle along said rail.

13. The system according to any one of claims 1 to 12, wherein said motive means comprises a fluid powered linear motor coupled to said reciprocating mechanism such as to provide at least axial reciprocating motion to said at least one suction opening.

14. The system according to any one of claims 1 to 13, wherein said manifold comprises a plurality of arms radiating from a conduit coaxial with said axis, and comprising a said suction outlet at the extremity of each said arm.

15. A method for cleaning a filter having a fluid inlet station using a self cleaning system of any one of claims 1 to 14, comprising:-
reciprocating a manifold along an axis with respect to said filter, said manifold comprising at least one suction opening adapted to be in proximity to said station and connectable to a suitable suction source for enabling foreign material to be removed from said filter when said system is installed and in operation with respect to said filter, wherein a fluid powered motive means propels said manifold along said axis, and a reciprocating mechanism for alternately changing the direction of motion of said manifold along said axis.
